# EUROPEAN PATENT SPECIFICATION

(11) **EP 4 143 368 B1**
(45) Date of publication and mention of the grant of the patent: **13.03.2024**
(21) Application number: 20725638.9
(22) Date of filing: 30.04.2020
(51) Int. Cl.: C25C 3/08, B32B 18/00, C04B 35/528, C04B 35/626, C04B 35/634

(54) **CATHODE BLOCKS FOR ALUMINIUM ELECTROYSIS AND A METHOD FOR PRODUCING SAME**
KATHODENBLÖCKE FÜR DIE ALUMINIUMELEKTROLYSE UND VERFAHREN ZU IHRER HERSTELLUNG
BLOCS CATHODIQUES POUR LA PRODUCTION ÉLECTROLYTIQUE D'ALUMINIUM ET PROCÉDÉ POUR LA PRODUCTION DE CEUX-CI

(43) Date of publication of application: 08.03.2023
(73) Proprietor: Norsk Hydro ASA, 0240 Oslo (NO)
(72) Inventor: SUNDHEIM JENSEN, Morten, 3733 Skien (NO)
(74) Representative: Hydro IPD
(86) International application number: PCT/EP2020/062030
(87) International publication number: WO 2021/219222

(56) References cited:
- WO-A1-2019/174948
- DE-A1-102012 201 468
- US-A- 4 466 995
- US-A- 4 624 766
- US-B1- 6 258 224

## Description

The present invention provides a novel method for production of cathode blocks for aluminium electrolysis in Hall-Héroult cells, where the whole surface or parts of the surface of the cathode blocks is covered by a composite material. The invention also relates to cathodes produced by the method. Depending on the design, these cathode block can have many different purposes and improve the operational performance of the Hall-H6roult cells. The blocks can be rodded by cathode bars, Cu-rods or collector plates to form a cathode solution.

### Prior art

Homogeneous composite cathode blocks for aluminium electrolysis based on C-TiB₂ is normally produced in the same manner as conventional cathode blocks, but TiB₂ powder is added to the dry coke aggregate and the pitch binder during preparation of the cathode paste. This C-TiB₂ composite block is then vibromoulded or extruded to form a green cathode block, before baking and subsequent graphitization. Alternatively, a two-layered cathode block design can be prepared with C-TiB₂ composite material only in the top layer, in order to reduce the usage of expensive TiB₂ powder. In this case one thick base layer of conventional cathode paste is evenly distributed in the bottom of a vibromould. Then a top layer of C-TiB₂ composite cathode paste is applied evenly on top of the base layer, before vibromoulding to form the green block followed by baking and graphitization. However, the accuracy during application C-TiB₂ paste for the top layer is limited, and it may be difficult to achieve an even and thin top layer. Moreover, more complex cathode block designs with C-TiB₂ composite top layer is difficult to produce when using the C-TiB₂ composite cathode paste in the forming process.

WO0036187 discloses a multi layer cathode structure for aluminium electrolysis cells.

DE 10 2012 201468 discloses further cathode structures for aluminium electrolysis cells.

### Present invention

The present invention provides a method as defined in claim 1 and a cathode block as defined in claim 12.

The production method will simplify the production, increase the precision during production, facilitate more complex designs of the cathode block and the top layer, and possibly reduce the production cost.

In the following, the present invention shall be further explained by examples and figures where:
Fig. 1 discloses production of a pre-fabricated green composite segment in a small vibromould,
Fig. 2 discloses details of a pre-fabricated green composite segment, seen from one side,
Fig. 3 discloses a conventional vibromould seen from one side, for forming the green cathode block based on conventional cathode paste and pre-fabricated green composite segments,
Fig. 4 discloses the same cathode block as in Fig.3 after vibromoulding, now turned up-side down relative to the position in the mold and with a complete composite cathode surface layer,
Fig. 5 discloses the same block as in Fig.4 as seen from the top,
Fig. 6 discloses the same block as in Fig. 4 as seen from the block end, and with two recesses for cathode bars,
Fig. 7 discloses a vibromould from one side with pre-fabricated green composite segments placed in specific areas, and where conventional cathode paste is distributed on top of the composite segments,
Fig. 8 discloses the same cathode block as in Fig.7 after vibromoulding, and turned up-side down relative to the position in the mold, and with a composite layer on parts of the cathode surface
Fig. 9 discloses the same cathode block as in Fig. 8 as seen from the top,
Fig. 10 discloses a vibromould from the side with a sloped bottom covered by pre-fabricated green composite segments, and where conventional cathode paste is distributed on top of the composite segments.
Fig.11 discloses the same cathode block as in Fig.10 turned up-side down relative to the position in the mold, and with a complete composite layer on the sloped cathode surface
Fig. 12 discloses the same block as in Fig.11 as seen from the top,
Fig. 13 discloses in a top view of one other cathode block design showing two areas with a composite layer extending from one end of the block to the other, produced in the same manner by placing pre-fabricated green composite segments in certain positions in the bottom of the vibromould,
Fig. 14 discloses the same block as in Fig.13 as seen from the block end,
Fig. 15 discloses a side view of a cathode block with a composite layer arranged in a transversal direction, produced in the same manner by placing pre-fabricated green composite segments in certain positions in the bottom of the vibromold,
Fig. 16 shows a top view of the cathode block shown in Fig. 15.

### Detailed description:

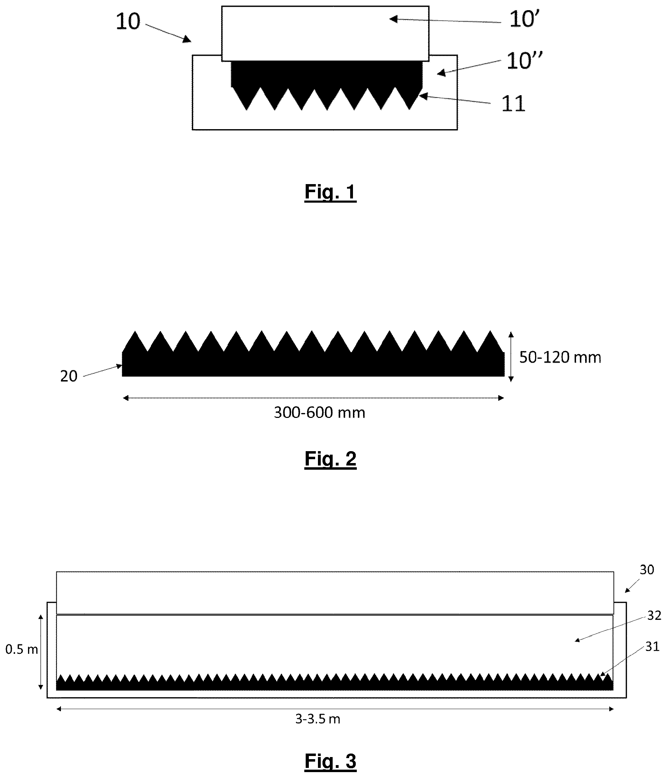

Fig. 1, discloses production of a green composite composite segment 11 in a small vibromould 10, where a composite cathode paste is poured into a mould part 10" and a vibrating weight 10' compacts the mass to form a composite segment with a certain shape and stiffness called a pre-fabricated green composite segment.

Fig. 2 discloses details of a pre-fabricated green composite segment 20.

Fig. 3 discloses a vibromould 30 seen from the side where the pre-fabricated green composite segments 31 covers the whole bottom of the vibromould and where conventional cathode paste 32 is distributed evenly on top of these segments. This way, the green cathode block is formed upside down.

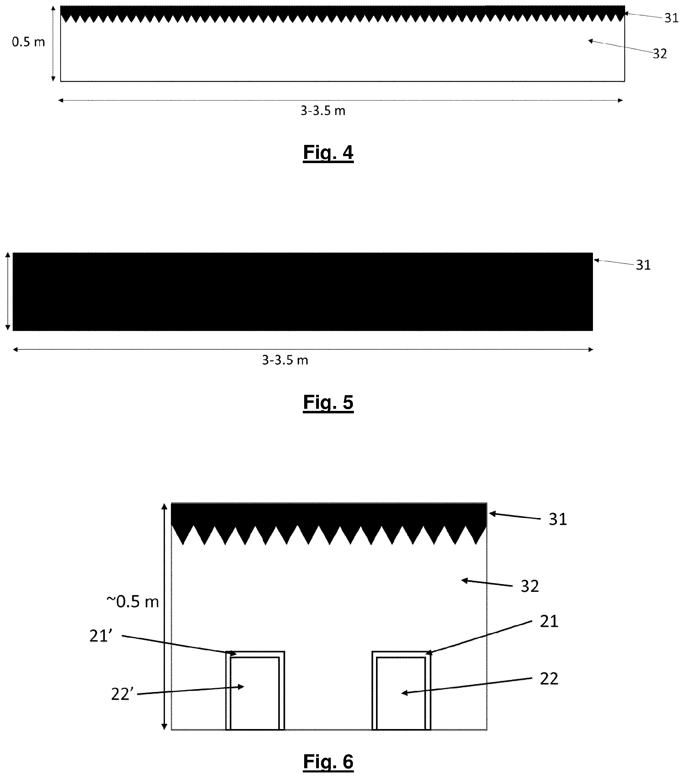

Fig. 4 discloses the same cathode block 32 as in Fig.3 after vibromoulding. Now with a complete composite layer 31 on top of the cathode paste 32.

Fig. 5 discloses the same cathode block as in Fig.4 as seen from the top. From this view only the composite layer 31 can be seen.

Fig. 6 discloses the same cathode block 32 as in Fig. 4 as seen from the block end, and provided with two recesses 21, 21' for cathode bars 22, 22', and the composite layer 31.

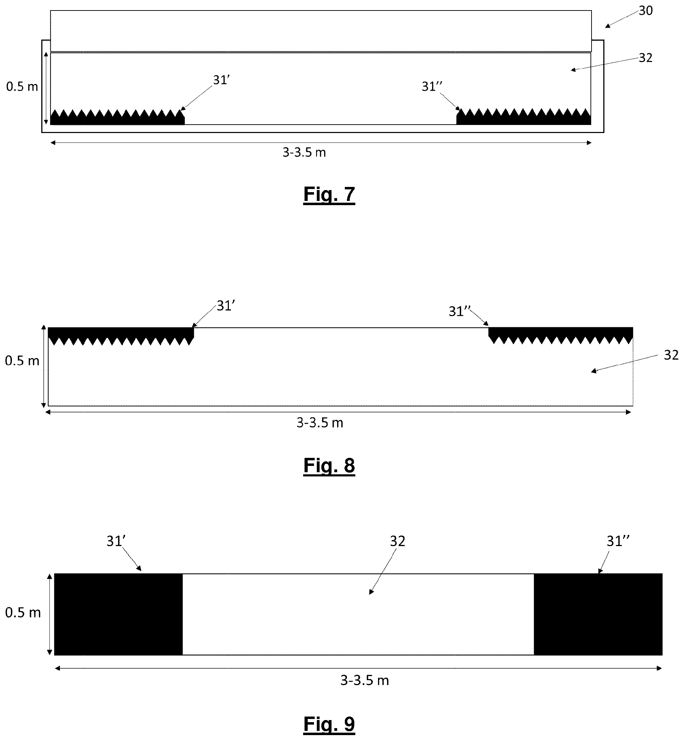

Fig. 7 discloses the vibromould 30 as seen from the side where pre-fabricated green composite segments 31', 31" are carefully placed only in some specific areas in the ends of the bottom of the vibromould and where conventional cathode paste 32 is distributed evenly on top of these. This way the cathode block is produced upside down.

Fig. 8 discloses the same cathode block 32 as in Fig.7 after vibromoulding. Now turned around with the composite layers on top towards the ends of the cathode block.

Fig. 9 discloses the same cathode block as in Fig. 8 as seen from the top. From this view the two areas with composite layer 31', 31" can be seen in the block ends, separated by an area based on conventional cathode paste 32.

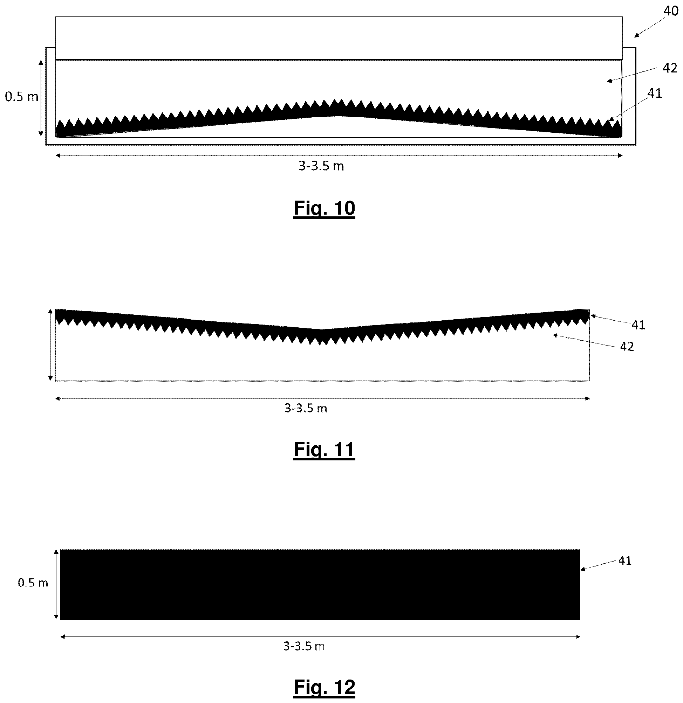

Fig. 10 discloses a vibromould 40 as seen from the side where the bottom of the vibromould have a sloped surface and where this sloped bottom of the vibromould is completely covered with pre-fabricated green composite segments 41 and where conventional cathode paste 42 is distributed evenly on top of these segments 41.

Fig.11 discloses the same cathode block 42 as in Fig.10 after vibromoulding. Now with a sloped composite layer 41 on top.

Fig. 12 discloses the same block as in Fig.10 as seen from the top. From this view only the composite layer 41 can be seen.

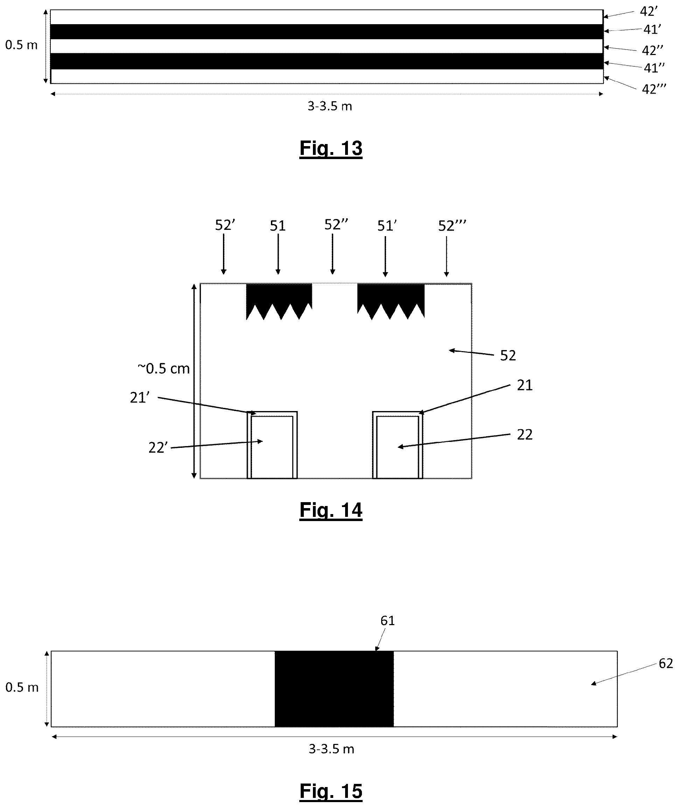

Fig. 13 discloses an example of another cathode block design made possible by using pre-fabricated green composite segments. Here the cathode block is seen from above, showing two areas with the composite material extending from one end of the block to the other end, prepared by careful positioning of the pre-fabricated green composite segments 51, 51'. The conventional cathode paste is shown at 52, 52', 52", 52'".

Fig. 14 discloses the same block as in Fig.13 as seen from the left block end, and with two recesses 21, 21' for cathode bars 22, 22'.

Fig. 15 discloses a side view of a cathode block with one area with a composite layer on the cathode surface arranged in a transversal direction in a cathode block 62, prepared by careful positioning of the pre-fabricated green composite segments 61.

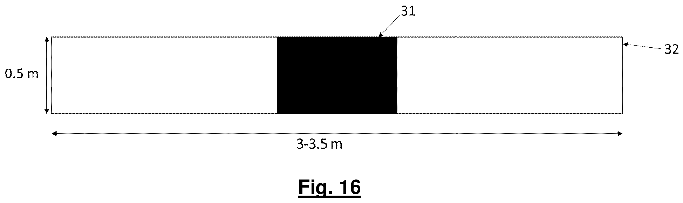

Fig. 16 shows a top view of the cathode block 62 shown in Fig. 15 with the composite segment 61.

The method for making the cathode can be based upon some main steps:
i) A special composite cathode paste is prepared for making the composite segments by adding a dry aggregate of TiB₂ powder or other metal boride powders such as HfB₂, ZrB₂, CrB₂, WB₂, or refectory metal carbide powder such as SiC, Cr₃C₂, B₄C, TiC, or Al₂O₃, and coke in addition to a pitch binder in a similar mixer as used for preparation of conventional cathode paste and by using a similar mixing procedure as used for preparation of conventional cathode paste. Alternatively, instead of conventional coke, the composite cathode paste can be prepared using coke with inclusions of the said borides, carbides, or alumina, in addition to the pitch binder and TiB₂ powder.
ii) The dry aggregate consists of 10-90 wt% of the said boride, carbide or alumina powder, and 10-90 wt% of coke particles, but more typically the aggregate consists of 20-40 wt% of the said boride, carbide or alumina powder, and 60-80 wt% of coke particles. 10-20 wt% of pitch binder, relative to the mass of the dry aggregate, is added in the mixing prosess. As for production of conventional cathode paste, the temperature during the mixing process depends on the softening point of the binder pitch. Typically, the temperature during mixing is 120-200 °C.
iii) The said borides, carbides or alumina powder in the dry aggregate has typically a particle size of 0.1 - 100 µm (d50), whereas the particles size distribution of the coke is typically 0.05 - 8 mm (d50).
iv) After mixing, green composite segments are formed by placing the composite cathode paste in a small pre-heated vibromould. The bottom of the mold may have a spiky, zig-zag, conical, pyramide or similar type of pattern to increase the surface area of one of the surfaces of the green composite segment. The segments formed in this process are called 'pre-fabricated green composite segments', since these segments can be produced beforehand and stored until they will be used for cathode block production at a later stage.
v) Before cathode block production, the pre-fabricated green composite segments are preheated and then placed in the bottom of the vibromould used for preparation of green cathode blocks, with the spiky pattern upwards.
vi) The conventional cathode paste is filled into the vibromould and distributed evenly on top of the pre-fabricated green composite segments, before vibromoulding of the cathode block is started. During vibromoulding the pre-fabricated green composite segments are fused with the cathode paste, and after vibromoulding these segments are an integrated part of the green cathode block. This way the green cathode block is produced upside down, with an integrated composite top layer resting on the bottom of the vibromould.
vii) After vibromoulding the green cathode block is baked and then graphitized in a similar manner as for conventional cathode blocks.
viii) Machining and rodding of the cathode blocks can be done in any manner known in the art, for instance by cathode bars, Cu rods or by collector plates.

The composite layer can be arranged so that it covers partly or wholly the upper part of the cathode block.

## Claims

1. A method for producing a cathode block for a Hall-Héroult electrolysis cell for aluminium production,
**characterised in that**
pre-fabricated green composite segments with a certain shape and stiffness made of a composite cathode paste comprising a dry aggregate of metal boride powder such as TiB₂, HfB₂, ZrB₂, CrB₂, WB₂, or refractory metal carbide powder such as SiC, Cr₃C₂, B₄C, TiC, or Al₂O₃, together with carbonaceous materials such as coke particles and pitch binder, are formed or pre-fabricated in a compacting apparatus, which is a small vibromould, for production of said composite segments, and then positioned in a bottom of a large vibromould for production of conventional cathode blocks, and where a carbonaceous cathode paste is filled in the large vibromould and distributed evenly on top of the pre-fabricated green composite segments positioned in the bottom of the large vibromould, followed by vibromoulding to fuse the said composite segments with the carbonaceous cathode paste, thus forming a green cathode block with an integrated composite layer on the cathode block surface or parts of the cathode block surface.

2. A method according to claim 1,
**characterised in that**
the dry aggregate consists of 10-90 wt% of the said boride, carbide or alumina powder, and 90-10 wt% coke particles, but typically the dry aggregate consists of 20-40 wt% of the said boride, carbide or alumina powder, and 80-60 wt% coke particles.

3. A method according to claim 1-2,
**characterised in that**
the particle size distribution (d50) of said borides, carbides, or alumina powder is 0.1 -100 µm , whereas the particle size distribution (d50) of the coke is 0.05 - 8 mm.

4. A method according to claim 1-3,
**characterised in that**
the composite cathode paste is prepared by mixing the dry aggregate and 10-30 wt% pitch binder, relative to the dry aggregate, in a conventional mixer as used for preparing conventional cathode paste and in a similar manner as for preparation of conventional cathode paste.

5. A method according to claim 1-4,
**characterised in that**
pre-fabricated green composite segments are formed by adding the composite cathode paste into a small vibromould for production of said composite segments with two opposing form parts where one part have a spiky, zig-zag, conical, or pyramidal surface pattern, so that the pre-fabricated green composite segment will have the said surface pattern on one side.

6. A method according to claim 5,
**characterised in that**
the pre-fabricated green composite segments are positioned on the bottom surface of the large vibromould for cathode block production with the spiky, zig-zag, conical, or pyramidal surface pattern pointing upwards, before addition of the carbonaceous cathode paste into the large vibromould.

7. A method according to claim 1-6,
**characterised in that**
the pre-fabricated green composite segments are placed in both ends of the large vibromould, and extending 20-100 cm towards the center of the vibromould, thus forming in a green cathode block with a composite surface in the block ends.

8. A method according to claim 1-6,
**characterised in that**
the pre-fabricated green composite segments are placed in the center of the bottom surface of the large vibromould for cathode block production and extending 20-50 cm toward each side of said vibromould, thus forming a green cathode block with a composite layer in the center of the cathode block surface.

9. A method according to claim 1-6
**characterised in that**
the pre-fabricated green composite segments are placed in specific areas in the bottom of the large vibromould for cathode block production extending from one end of the block to the other, forming parallel lines 5-20 cm wide along the vibromould, thus forming in a green cathode block with a composite layer in parallel lines along the cathode block surface.

10. A method according to claim 5,
**characterised in that**
the pre-fabricated green composite segments are arranged onto a sloped surface in the bottom of the large vibromould for cathode production with the spiky, zig-zag, conical, or pyramidal surface pattern pointing upwards, before addition of the carbonaceous cathode paste into the said vibromould, thus forming in a green cathode block with a sloped composite surface.

11. A method according to claim 1-10,
**characterised in that**
following vibromoulding, the green cathode block with the composite layer is baked at a corresponding temperature and duration, and in a corresponding manner as for conventional cathode blocks, before graphitization at a corresponding temperature and duration, and in a similar manner as for conventional cathode blocks.

12. A cathode block for a Hall-Héroult electrolysis cell for aluminium production, the block comprising an upper composite layer and a lower carbonaceous cathode material, **characterised in that**
the composite layer covers partly or wholly the upper part of the cathode block and is constituted by pre-fabricated green composite segments with a certain shape and stiffness made of a composite cathode paste comprising a dry aggregate of metal boride powder such as TiB₂, HfB₂, ZrB₂, CrB₂, WB₂, or refractory metal carbide powder such as SiC, Cr₃C₂, B₄C, TiC, or Al₂O₃, together with carbonaceous materials such as coke particles and pitch binder, wherein the cathode block is obtainable by forming or prefabricating the green composite segments in a compacting apparatus, which is a small vibromould, for production of said composite segments, positioning the segments in a bottom of a large vibromould for production of conventional cathode blocks, and then fusing the segments to the carbonaceous cathode material during vibromoulding of the green cathode before baking and graphitization.

13. A cathode block according to claim 12,
**characterised in that**
the pre-fabricated green segments are made of a composite paste containing 10-90 wt% metal boride powder such as TiB₂, HfB₂, ZrB₂, CrB₂, WB₂, or refractory metal carbide powder such as SiC, Cr₃C₂, B₄C, TiC, or Al₂O₃ and carbonaceous materials such as coke particles and pitch binder.

14. A cathode block according to claim 12-13,
**characterised in that**
the pre-fabricated green segments have a spiky, zig-zag, conical, or pyramidal surface pattern on the side fused with the carbonaceous cathode material.

## Patentansprüche

1. Verfahren zur Herstellung eines Kathodenblocks für eine Hall-Héroult-Elektrolysezelle zur Aluminiumherstellung,
**dadurch gekennzeichnet, dass**
vorgefertigte grüne Kompositsegmente mit einer bestimmten Form und Steifigkeit, hergestellt aus einer Komposit-Kathodenpaste, umfassend ein trockenes Aggregat aus einem Metallboridpulver, wie etwa TiB₂, HfB₂, ZrB₂, CrB₂, WB₂, oder einem feuerfesten Metallcarbidpulver, wie etwa SiC, Cr₃C₂, B₄C, TiC, oder Al₂O₃, zusammen mit kohlenstoffhaltigen Materialien, wie etwa Kokspartikeln und Pechbinder, in einer Verdichtungsvorrichtung, nämlich einer kleinen Vibroform, zur Herstellung der Kompositsegmente, ausgebildet oder vorgefertigt und dann in einem unteren Abschnitt einer großen Vibroform zur Herstellung herkömmlicher Kathodenblöcke angeordnet werden, und wobei eine kohlenstoffhaltige Kathodenpaste in die große Vibroform gefüllt und gleichmäßig auf den vorgefertigten grünen Kompositsegmenten, die im unteren Abschnitt der großen Vibroform angeordnet sind, verteilt wird, gefolgt von Vibroformen, um die Kompositsegmente mit der kohlenstoffhaltigen Kathodenpaste zu verschmelzen, wodurch ein grüner Kathodenblock mit einer integrierten Kompositschicht auf der Kathodenblockoberfläche oder Teilen der Kathodenblockoberfläche ausgebildet wird.

2. Verfahren nach Anspruch 1,
**dadurch gekennzeichnet, dass**
das trockene Aggregat aus 10 - 90 Gew.-% des Borid-, Carbid- oder Aluminiumoxidpulvers und 90 - 10 Gew.-% Kokspartikeln besteht, jedoch typischerweise das trockene Aggregat aus 20 - 40 Gew.-% des Borid-, Carbid- oder Aluminiumoxidpulvers und 80 - 60 Gew.-% Kokspartikeln besteht.

3. Verfahren nach Anspruch 1 - 2,
**dadurch gekennzeichnet, dass**
die Partikelgrößenverteilung (d50) des Borid-, Carbid- oder Aluminiumoxidpulvers 0,1 - 100 µm beträgt, wohingegen die Partikelgrößenverteilung (d50) des Kokses 0,05 - 8 mm beträgt.

4. Verfahren nach Anspruch 1 - 3,
**dadurch gekennzeichnet, dass**
die Komposit-Kathodenpaste hergestellt wird, indem das trockene Aggregat und 10 - 30 Gew.-% Pechbinder, bezogen auf das trockene Aggregat, in einem herkömmlichen Mischer, wie er zum Herstellen herkömmlicher Kathodenpaste benutzt wird, und auf ähnliche Weise wie zur Herstellung herkömmlicher Kathodenpaste gemischt werden.

5. Verfahren nach Anspruch 1 - 4,
**dadurch gekennzeichnet, dass**
vorgefertigte grüne Kompositsegmente ausgebildet werden, indem die Komposit-Kathodenpaste in eine kleine Vibroform zur Herstellung der Kompositsegmente mit zwei gegenüberliegenden Formteilen eingebracht wird, wobei ein Teil ein zackiges, Zickzack-, konisches oder pyramidenförmiges Oberflächenmuster aufweist, sodass das vorgefertigte grüne Kompositsegment auf einer Seite dieses Oberflächenmuster aufweist.

6. Verfahren nach Anspruch 5,
**dadurch gekennzeichnet, dass**
vor dem Einbringen der kohlenstoffhaltigen Kathodenpaste in die große Vibroform die vorgefertigten grünen Kompositsegmente auf der Bodenfläche der großen Vibroform zur Kathodenblockherstellung angeordnet werden, wobei das zackige, Zickzack-, konische oder pyramidenförmige Oberflächenmuster nach oben weist.

7. Verfahren nach Anspruch 1 - 6,
**dadurch gekennzeichnet, dass**
die vorgefertigten grünen Kompositsegmente an beiden Enden der großen Vibroform und so, dass sie sich 20 - 100 cm zur Mitte der Vibroform erstrecken, angeordnet werden, wodurch ein grüner Kathodenblock mit einer Kompositoberfläche an den Blockenden ausgebildet wird.

8. Verfahren nach Anspruch 1 - 6,
**dadurch gekennzeichnet, dass**
die vorgefertigten grünen Kompositsegmente in der Mitte der Bodenfläche der großen Vibroform zur Kathodenblockherstellung und so, dass sie sich 20 - 50 cm zu jeder Seite der Vibroform erstrecken, angeordnet werden, wodurch ein grüner Kathodenblock mit einer Kompositschicht in der Mitte der Kathodenblockoberfläche ausgebildet wird.

9. Verfahren nach Anspruch 1 - 6,
**dadurch gekennzeichnet, dass**
die vorgefertigten grünen Kompositsegmente in spezifischen Bereichen im unteren Abschnitt der großen Vibroform zur Kathodenblockherstellung, sodass sie sich von einem Ende des Blocks zum anderen erstrecken und 5 - 20 cm breite parallele Linien entlang der Vibroform ausbilden, angeordnet werden, wodurch ein grüner Kathodenblock mit einer Kompositschicht in parallelen Linien entlang der Kathodenblockoberfläche ausgebildet wird.

10. Verfahren nach Anspruch 5,
**dadurch gekennzeichnet, dass**
vor dem Einbringen der kohlenstoffhaltigen Kathodenpaste in die Vibroform die vorgefertigten grünen Kompositsegmente auf einer schrägen Oberfläche im unteren Abschnitt der großen Vibroform zur Kathodenproduktion angeordnet werden, wobei das zackige, Zickzack-, konische oder pyramidenförmige Oberflächenmuster nach oben weist, wodurch ein grüner Kathodenblock mit einer schrägen Kompositoberfläche ausgebildet wird.

11. Verfahren nach Anspruch 1 - 10,
**dadurch gekennzeichnet, dass**
nach dem Vibroformen, vor der Graphitierung beil für eine(r) entsprechende(n) Temperatur und Dauer und auf ähnliche Weise wie für herkömmliche Kathodenblöcke, der grüne Kathodenblock mit der Kompositschicht beil für eine(r) entsprechende(n) Temperatur und Dauer und auf entsprechende Weise wie für herkömmliche Kathodenblöcke gebrannt wird.

12. Kathodenblock für eine Hall-Héroult-Elektrolysezelle zur Aluminiumherstellung, wobei der Block eine oben befindliche Kompositschicht und ein unten befindliches kohlenstoffhaltiges Kathodenmaterial umfasst,
**dadurch gekennzeichnet, dass**
die Kompositschicht den oberen Teil des Kathodenblocks teilweise oder ganz bedeckt und durch vorgefertigte grüne Kompositsegmente mit einer bestimmten Form und Steifigkeit, hergestellt aus einer Komposit-Kathodenpaste, umfassend ein trockenes Aggregat aus einem Metallboridpulver, wie etwa TiB₂, HfB₂, ZrB₂, CrB₂, WB₂, oder einem feuerfesten Metallcarbidpulver, wie etwa SiC, Cr₃C₂, B₄C, TiC, oder Al₂O₃, zusammen mit kohlenstoffhaltigen Materialien, wie etwa Kokspartikeln und Pechbinder, gebildet wird, wobei der Kathodenblock erhältlich ist durch Ausbilden oder Vorfertigen der grünen Kompositsegmente in einer Verdichtungsvorrichtung, nämlich einer kleinen Vibroform, zur Herstellung der Kompositsegmente, Anordnen der Segmente in einem unteren Abschnitt einer großen Vibroform zur Herstellung herkömmlicher Kathodenblöcke und anschließendes Verschmelzen der Segmente mit dem kohlenstoffhaltigen Kathodenmaterial während des Vibroformens der grünen Kathode vor dem Brennen und der Graphitierung.

13. Kathodenblock nach Anspruch 12,
**dadurch gekennzeichnet, dass**
die vorgefertigten grünen Segmente aus einer Kompositpaste hergestellt sind, die 10 - 90 Gew.-% eines Metallboridpulvers, wie etwa TiB₂, HfB₂, ZrB₂, CrB₂, WB₂, oder feuerfesten Metallcarbidpulvers, wie etwa SiC, Cr₃C₂, B₄C, TiC, oder Al₂O₃ und kohlenstoffhaltige Materialien, wie etwa Kokspartikel und Pechbinder, enthält.

14. Kathodenblock nach Anspruch 12 - 13,
**dadurch gekennzeichnet, dass**
die vorgefertigten grünen Segmente auf der Seite, die mit dem kohlenstoffhaltigen Kathodenmaterial verschmolzen ist, ein zackiges, Zickzack-, konisches oder pyramidenförmiges Oberflächenmuster aufweisen.

## Revendications

1. Procédé de production d'un bloc de cathode pour électrolyse d'Hall-Héroult pour la production d'aluminium,
**caractérisé en ce que**
des segments composites verts pré-fabriqués avec une certaine forme et rigidité constitués d'une pâte de cathode composite comprenant un agrégat sec de poudre de borure de métal telle que TiB₂, HfB₂, ZrB₂, CrB₂, WB₂ ou une poudre de carbure de métal réfractaire telle que SiC, Cr₃C₂, B₄C, TiC ou Al₂O₃, ensemble avec des matériaux carbonacés tels que des particules de coke et un brai servant de liant, sont formés ou pré-fabriqués dans un appareil de compactage, qui est un petit vibromoule, pour la production desdits segments composites, puis positionnés dans une partie inférieure d'un grand vibromoule pour la production de blocs de cathode classiques et où une pâte de cathode carbonacée est remplie dans le grand vibromoule et distribuée de manière égale sur la partie supérieure des segments composites verts pré-fabriqués positionnés dans la partie inférieure du grand vibromoule, suivi par un vibromoulage pour fusionner lesdits segments composites avec la pâte de cathode carbonacée, formant ainsi un bloc de cathode vert avec une couche composite intégrée sur la surface du bloc de cathode ou des parties de la surface du bloc de cathode.

2. Procédé selon la revendication 1,
**caractérisé en ce que**
l'agrégat sec est constitué de 10 à 90 % en poids de ladite poudre de borure, de carbure ou d'alumine et de 90 à 10 % en poids de particules de coke, mais typiquement l'agrégat sec est constitué de 20 à 40 % en poids de ladite poudre de borure, de carbure ou d'alumine et de 80 à 60 % en poids de particules de coke.

3. Procédé selon la revendication 1 à 2,
**caractérisé en ce que**
la distribution de taille de particule (d50) desdites poudres de borures, de carbures ou d'alumine est de 0,1 à 100 µm, alors que la distribution de taille de particule de la coke (d50) est de 0,05 à 8 mm.

4. Procédé selon la revendication 1 à 3,
**caractérisé en ce que**
la pâte de cathode composite est préparée en mélangeant l'agrégat sec et 10 à 30 % en poids d'un brai servant de liant, par rapport à l'agrégat sec, dans un mixeur classique tel qu'utilisé pour préparer une pâte de cathode classique et de manière similaire à la préparation de pâte de cathode classique.

5. Procédé selon la revendication 1 à 4,
**caractérisé en ce que**
les segments composites verts pré-fabriqués sont formés par l'addition de la pâte de cathode composite dans un petit vibromoule pour la production desdits segments composites avec deux parties de forme opposée où une partie a un profil de surface pointu, en zig-zag, conique ou pyramidal, de sorte que le segment composite vert pré-fabriqué aura ledit profil de surface sur un côté.

6. Procédé selon la revendication 5,
**caractérisé en ce que**
les segments composites verts pré-fabriqués sont positionnés sur la surface de partie inférieure du grand vibromoule pour la production de bloc de cathode avec le profil de surface pointu, en zig-zag, conique ou pyramidal pointant vers le haut, avant l'addition de la pâte de cathode carbonacée dans le grand vibromoule.

7. Procédé selon la revendication 1 à 6,
**caractérisé en ce que**
les segments composites verts pré-fabriqués sont placés dans les deux extrémités du grand vibromoule et s'étendant à 20 à 100 cm vers le centre du vibromoule, formant ainsi un bloc de cathode vert avec une surface composite dans les extrémités de bloc.

8. Procédé selon la revendication 1 à 6,
**caractérisé en ce que**
les segments composites verts pré-fabriqués sont placés dans le centre de la partie inférieure du grand vibromoule pour la production de bloc de cathode et s'étendant de 20 à 50 cm vers chaque côté dudit vibromoule, formant ainsi un bloc de cathode vert avec une couche composite dans le centre de la surface du bloc de cathode.

9. Procédé selon la revendication 1 à 6,
**caractérisé en ce que**
les segments composites verts pré-fabriqués sont placés dans des surfaces spécifiques dans la partie inférieure du grand vibromoule pour la production de bloc de cathode d'une extrémité du bloc à l'autre, formant des lignes parallèles de 5 à 20 cm de large le long du vibromoule, formant ainsi un bloc de cathode vert avec une couche composite en lignes parallèles le long de la surface du bloc de cathode.

10. Procédé selon la revendication 5,
**caractérisé en ce que**
les segments composites verts pré-fabriqués sont disposés sur une surface en pente dans la partie inférieure du grand vibromoule pour la production de cathode avec le profil de surface pointu, en zig-zag, conique ou pyramidal pointant vers le haut, avant l'addition de la pâte de cathode carbonacée dans ledit vibromoule, formant ainsi un bloc de cathode vert avec une surface composite en pente.

11. Procédé selon la revendication 1 à 10,
**caractérisé en ce que**
après le vibromoulage, le bloc de cathode vert avec la couche composite est cuit à une température et une durée correspondantes et de manière correspondante comme pour les blocs de cathode classiques, avant graphitisation à une température et une durée correspondantes et de manière similaire aux blocs de cathode classiques.

12. Bloc de cathode pour électrolyse Hall-Héroult pour la production d'aluminium, le bloc comprenant une couche composite supérieure et un matériau de cathode carbonacé inférieur,
**caractérisé en ce que**
la couche composite recouvre partiellement ou entièrement la partie supérieure du bloc de cathode et est constituée par des segments composites verts pré-fabriqués avec une certaine forme et rigidité constitués d'une pâte de cathode composite comprenant un agrégat sec de poudre de borure de métal telle que TiB₂, HfB₂, ZrB₂, CrB₂, WB₂ ou une poudre de carbure de métal réfractaire telle que SiC, Cr₃C₂, B₄C, TiC ou Al₂O₃, ensemble avec des matériaux carbonacés tels que des particules de coke et un brai servant de liant, le bloc de cathode pouvant être obtenu en formant ou en pré-fabriquant les segments composites verts dans un appareil de compactage, qui est un petit vibromoule, pour la production desdits segments composites, en positionnant les segments dans une partie inférieure d'un grand vibromoule pour la production de blocs de cathode classiques, puis fusionner les segments au matériau de cathode carbonacé durant le vibromoulage de la cathode verte avant la cuisson et la graphitisation.

13. Bloc de cathode selon la revendication 12,
**caractérisé en ce que**
les segments verts pré-fabriqués sont constitués d'une pâte composite contenant 10 à 90 % en poids de poudre de borure de métal telle que TiB₂, HfB₂, ZrB₂, CrB₂, WB₂ ou une poudre de carbure de métal réfractaire telle que SiC, Cr₃C₂, B₄C, TiC ou Al₂O₃ et des matériaux carbonacés tels que des particules de coke et un brai servant de liant.

14. Bloc de cathode selon la revendication 12 à 13,
**caractérisé en ce que**
les segments verts pré-fabriqués ont un profil de surface pointu, en zig-zag, conique ou pyramidal sur le côté fusionné avec le matériau de cathode carbonacé.
